# EUROPEAN PATENT APPLICATION

(11) **EP 3 977 860 A1**
(43) Date of publication of application: **06.04.2022**
(21) Application number: 19931026.9
(22) Date of filing: 24.05.2019
(51) Int. Cl.: A21D 13/38, A21D 13/40, B65B 9/00

(54) **SEMI-FINISHED FOOD PRODUCT AND METHOD FOR PREPARING SAME**

(71) Applicant: Pojitok, Sergej Anatolievich, Minsk, 220040 (BY)
(72) Inventor: Pojitok, Sergej Anatolievich, Minsk, 220040 (BY)
(74) Representative: Kromanis, Artis
(86) International application number: PCT/BY2019/000008
(87) International publication number: WO 2020/237342

(57) **Abstract**

A semi-finished food product comprises an edible ready-to-eat shell (1) and, contained inside said edible shell (1), a ready-to-eat filling (2) made from products requiring moistening prior to consumption, and a moistening ingredient (3) disposed inside a three-dimensional insert (4) made of a material that is fit for use in contact with food products. In the longitudinal direction, the three-dimensional insert (4) is of a size greater than that of the edible shell (1); in the transverse direction, it is of a size less than that of the edible shell (1). One end (5) of said insert (4) is closed, and the opposite end (6) of the three-dimensional insert (4) is rolled up to prevent the possibility of the ingredient being prematurely released. The three-dimensional insert (4) containing the ingredient (3) lies on the filling (2) or inside the filling (2) such that the rolled up end (6) of the three-dimensional insert (4) is situated inside the edible shell (1), and the closed end (5) of the three-dimensional insert (4) extends outside the edible shell (1). The end (5) of the three-dimensional insert (4) extending outside the edible shell (1) is provided with a clamp or clip or a tie (7), or is heat-sealed or glued (8).

## Description

### Field of the invention

The invention relates to the food industry and public catering, in particular to the instantly preparable semi-finished food products, for the manufacture of which flour products and raw materials of animal and/or vegetable origin are used. The invention can be used in fast food systems, in particular located in places of mass recreation, sports and entertainment events, etc.

### Background of the invention

There are already well-known fast-food products such as cheeseburgers or sandwiches, produced by such a fast-food chain like McDonald's, representing a planar assembly of one piece of bread covered with a ketchup and a mustard, onions, pieces of cucumber, a flat cutlet, cheese and covered with another piece of bread [1].

The disadvantage of such an assembly includes the fact that when using these products, vegetables and sauces are squeezed out and pieces of bread are displaced, which reduces the consumer qualities of the product during its use. Such a product cannot be stored and should be used immediately after preparation.

The prior art also discloses compound food products such as shawarma or doner, which comprises a flour product such as a flat cake, pita, tortilla or lavash, in which a filling is placed, consisting of a specially fried in a vertical grill and then chopped meat, mainly beef or chicken, and chopped ready-to-eat vegetables, followed by the addition of sauce, in particular mayonnaise, etc. [2].

The use of sauces in aforementioned products gives them an original taste and helps to soften the filling. However, even with short storage under the influence of the sauce, a flat cake, lavash or pita softens, which reduces the consumer properties of the product.

The prior art also discloses a food product in the form of a sandwich consisting of two halves of a baked roll and a moistening ingredient located therebetween, in which the halves of the baked roll are fastened together with a mixture for baking, providing integrity of the finished product. There is also a known method for preparing said sandwich, in which the baked roll cut into two halves, a baking mixture is applied along the perimeter of the lower half, which allows to ensure the integrity of the finished product, a moistening ingredient is introduced into the formed space, after which the lower half of the baked roll is baked and while the lower half is hot it is covered with the top half [3]. The disadvantage of this solution is the complexity of manufacturing the product, as well as a reduction of shelf life due to the presence of sauce in the finished product, which eventually softens the halves of the sandwich.

The prior art also discloses a product containing a microcapsule for the delivery of a necessary substance, which contains an agglomerate of primary microcapsules, and each individual primary microcapsule has a primary shell and a useful substance encapsulated in the primary microcapsule, and the agglomerate of primary microcapsules is encapsulated by an outer shell, while the primary shell or outer shell, or both, contain gelatine with a Bloom number from about 51 to about 300, wherein a method for delivering a necessary substance into the product is also described [4]. It can be assumed that the capsules can also be used to deliver various sauces into a food product, which will provide an increase in its shelf life. However, the disadvantage of the specified solution is the complexity of manufacturing said product.

The closest prior art to the claimed technical solution is a sandwich product of instant preparation, which comprises a piece of a bread, which contains an edible insert for a salad, salad ingredients and a meat or protein part. A salad dressing in the form of a moistening ingredient is injected into a wrapped part of the salad or a wrapped part of the sandwich product by means of a multi-needle injection device comprising a cylinder, a plunger assembly including a piston movable along the inner length of the cylinder, and a multi-needle device including an inlet channel connected to the cylinder, and multiple needles, wherein each needle has a tip and at least one side port near to the tip [5]. The disadvantage of this solution is the complexity of the manufacture of the multi-needle injection device used for the injection of the salad dressing, the manufacture of the final product is performed in stationary conditions of the catering establishment immediately before its use, and the short shelf life of the finished product. The problem to be solved by the claimed technical solution is the design of a semi-finished fast food product with an increased shelf life compared to the known technical solutions, as well as providing a simple method for preparing the specified semi-finished product and the method of its use.

### Summary of the invention

The aforementioned problem is solved by a semi-finished food product comprising a ready-to-eat edible shell and ready-to-eat filling located within the edible shell and made of products that require moistening before eating, and a moistening ingredient, wherein the moistening ingredient is placed in a volumetric insert made of a material suitable for use in contact with food, having a size in the longitudinal direction exceeding the size of the edible shell, and in the transverse direction, having a size less than the size of the edible shell, wherein one end of the said volumetric insert is closed and the opposite end of the volumetric insert is rolled up to exclude the possibility of premature release of the moistening ingredient, wherein the volumetric insert with the moistening ingredient is placed on the filling or in the filling so that the rolled end of the volumetric insert is within the edible shell and the closed end of the volumetric insert extends beyond the edible shell.

The volumetric insert is made of collagen, natural, cellulose, synthetic or fibrous material.

In one embodiment of the invention, the end of the volumetric insert, which extends beyond the edible shell, is provided with a clamp, a clip or a tie, and in another embodiment of the invention, the end of the volumetric insert, protrudes beyond the edible shell, is sealed or glued.

The edible shell is a ready-to-eat flour product, wherein the flour product is selected from the group comprising a bread, a bun, a flat cake, a pita, a pita bread, or tortilla.

In one embodiment of the invention, the filling is a chopped meat or fish or vegetable products or combinations thereof, and the moisturizing filer is a ketchup, a mayonnaise, a salad dressing, a marinade, a horseradish or a mustard or compositions thereof, or a sauce with the addition of chopped vegetables and/or seasonings. In another embodiment of the invention, the filling is a confectionery product, and the moistening ingredient is confectionery filling, cream, honey or jelly.

The aforementioned aim is also reached by the method of preparing the semi-finished product, wherein the method comprise the steps of placing a filling on/in the edible shell, filling the volumetric insert with the moistening ingredient, rolling up one end of the said volumetric insert and placing a clamp, a clip or tie on the opposite end of the volumetric insert forming a closed volume and ensuring that premature release of the moistening ingredient is avoided, placing the volumetric insert within the moistening ingredient on the filling or within the filling, shaping the semi-finished product in such a way that the rolled up end of the volumetric insert is within the edible shell, and the opposite end of the volumetric insert closed with a clamp, a clip or tie is located outside the edible shell.

The aim is also reached by an optional method for preparation of the semi-finished food product, in which a volumetric insert is used having already closed or pre-sealed ends, wherein the method comprises the steps of placing the filling on/in the edible shell, filling the volumetric insert with the moistening ingredient, rolling up one end of said volumetric insert opposite to the closed one forming a closed volume avoiding a possibility of premature release of the moistening ingredient, placing the volumetric insert with the moistening ingredient on the filling or within the filling, shaping the semi-finished product so that the rolled up end of the volumetric insert is inside the edible shell, and the opposite end of the volumetric insert, which is the pre-sealed or already closed end, is located outside the edible shell.

Aforementioned problem is also solved by a use of a semi-finished product, wherein before use before use, the volumetric insert is removed from the edible shell by holding its closed end located outside the edible shell, while simultaneously squeezing out the moistening ingredient within the product.

The skilled person would know that for moisturizing of the filling the following products may be used: sauces with vegetable oil, vinegar, butter, with thickeners, without thickeners, cooked in broths, creams, with flour sauces, etc. It can be mayonnaise, salad dressings, marinades, horseradish, mustard, ketchup, dip, wherein the moistening ingredient is filled or not filled with chopped vegetables and seasonings, confectionery fillings and creams, honey, etc. Flour products that are used to prepare aforementioned semi-finished products are shawarma, burrito, tacos, wrap, sandwich, gyros, hot dog, eclair, burger, various rolls, biscuit, etc.

The main advantage of the proposed technical solution is that during storage of the semi-finished product there is no contact between the moistening ingredient and the filling and the edible shell. As a result, the edible shell does not soften, and the finished product does not lose its consumer properties during long-term storage. Due to this, the shelf life of the prepared semi-finished food product is significantly increased in comparison with the analogues known from the prior art. Known semi-finished products can be stored for no more than 30 minutes after moistening. The shelf life of the semi-finished product using the volumetric insert with the moistening ingredient reaches 48 hours at a temperature of +3...+7 degrees Celsius. At the same time, before the use of the prepared semi-finished food product, the filling is moistened with the moistening ingredient, which provides the product with the necessary taste properties.

### Brief description of the drawings

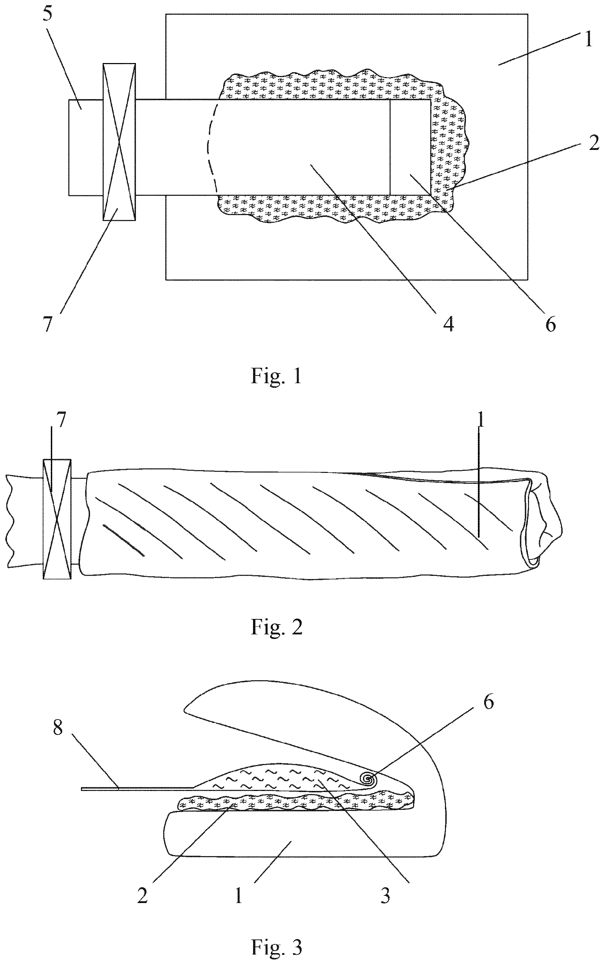

FIG. 1 - a scheme illustrating an arrangement of a filling and a volumetric insert on a pita bread or tortilla, wherein the closed end of the volumetric insert is equipped with a clamp or a clip, or a tie;
FIG. 2 - illustrates a prepared semi-finished food product using pita or tortilla as an edible shell, wherein the closed end of the volumetric insert is equipped with a clamp or a clip, or a tie;
FIG. 3 - illustrates a prepared semi-finished food product using bread rolls, bread or pita as an edible shell, wherein the closed end of the volumetric insert is glued or sealed.

The semi-finished food product comprises a ready-to-eat edible shell 1 and a ready-to-eat filling 2 located within the edible shell 1, wherein the filling is made of products that require moistening before eating, and a moistening ingredient 3 placed in a filling and made of a material suitable for use in contact with a food, volumetric insert 4. The volumetric insert 4 having a size that in the longitudinal direction exceeds the size of the edible shell 1 and a size that in the transverse direction is smaller than the size of the edible shell 1. One end 5 of the volumetric insert 4 is closed, and the opposite end 6 of the volumetric insert 4 is rolled up to prevent the possibility of premature release of the moistening ingredient. The volumetric insert 4 with the moistening ingredient 3 is placed on the filling 2 or in the filling 2 in such a way that the rolled up end 6 of the volumetric insert 4 is inside the edible shell 1, and the closed end 5 of the volumetric insert 4 protrudes beyond the edible shell 1. The volumetric insert 4 is made from collagen or natural or cellulosic or synthetic or fibrous material. The end 5 of the volumetric insert 4, which protrudes beyond the limit of the edible shell 1, is provided with a clamp or clip, or a tie 7 or is sealed or glued 8.

The edible casing 1 is a ready-to-eat flour product, which is a bread, or a bread roll, or a flat cake, or a pita, or a pita bread or a cake. The filling 2 is chopped meat or fish or vegetable products, or combinations thereof. The moistening ingredient 3 is a ketchup or mayonnaise, or salad dressing, or marinade, or horseradish, or mustard, or compositions based on them, or sauce with the addition of chopped vegetables and/or seasonings.

If the filling 2 is a confectionery product, then confectionery filling or cream, or honey, or jelly is used as the moistening ingredient 3.

### Detailed description of the embodiments

The manufacture of the inventive, fast preparable semi-finished food product having a long shelf life is performed as follows.

A ready-to-eat flour product is used for the edible shell 1. In the case of a bread roll or a bread, they are cut in half or cut to form a pocket. In the formed pocket a filling 2, which requires moistening before eating, is filled, wherein the filling is made of meat or fish or vegetable products or compositions thereof. The moistening ingredient 3 necessary for moisturizing the filling 2 and for providing certain taste properties to said filling, is placed in a volumetric insert 4 made of a material suitable for use in contact with a food, for example, made of collagen or natural or cellulose, or synthetic, or fibrous material. The end 6 of the volumetric insert 4 is rolled up, and the opposite end 5 of the volumetric insert 4 is equiped with a clamp, a clip, or a tie 7. It is also possible to use a volumetric insert with a pre-sealed or glued 8 end 5. If necessary, a volumetric insert 4 with two open ends 5 and 6 may be used. In this case, it is necessary to additionally ensure that the moistening ingredient 3 would not flow out from the volumetric insert 4, which is not very convenient. The volumetric insert 4 with moistening ingredient 3 is placed over the filling 2 or within the filling 2 in the edible shell 1 so that the rolled-up end 6 of the volumetric insert 4 does not extend beyond the edible shell 1, and the opposite closed end 5 equipped with the clamp or the clip, or the tie 6, either sealed or glued, is placed outside the edible shell 1. As noted earlier, it is possible to use a volumetric insert 4 with two open ends. Next, the semi-finished product is formed in such a way that the filling 2 and the volumetric insert 4 with the moistening ingredient 3 are placed within the edible shell 1.

Preparation of said semi-finished food product in a pita is similar to the above-described preparation of the semi-finished product in the bread roll or the bread, with the only difference that the pita initially has the pocket designed for storing food.

When using a cut bread, a bread roll, or a pita bread, the preparation of the semi-finished product involves compression of the halves of flour products indicated as the edible shell. Outside the edible shell 1, only a small area of the volumetric insert 4 should remain, on which the closed end is provided, wherein the closed end comprises the clamp, or the clip, or the tie 7, or a glue line, or a seal 8 etc., or the open end. In this way prepared semi-finished food product can be packed and placed in places of a long-term storage or transported to places of consumption.

When a tortilla or a lavash, or a flatbread is used as the edible shell 1, then the filling 2 made of chopped meat or fish, or vegetable products, or combinations thereof, or confectionery products, which require moistening before eating, is placed in the centre of the tortilla, the lavash or the flatbread. The moistening ingredient 3, which is necessary to moisturize the filling and provide certain taste properties to the filling, is placed in a volumetric insert 4 made of a material suitable for use in contact with food, for example from collagen or natural or cellulosic or synthetic or fibrous material. One end 5 of the volumetric insert 4 is rolled up, which does not allow the moistening ingredient to flow out of the insert, and the opposite end 6 is provided with the clamp or the clip, or the tie 7, etc. or the volumetric insert 4 with a sealed or glued end 8 is used. Thus, the moistening ingredient 3 is in a closed volume. The volumetric insert 4 with moistening ingredient 3 is placed on or within the filling 2. Next, the tortilla, the pita bread or the flatbread is wrapped in the form of a roll or in the form of an envelope, namely in such a way that the filling 2 and the volumetric insert 4 with moistening ingredient 3 are located within the edible shell 1, and only a small section of the volumetric insert 4 is outside the edible shell 1, on which the clamp, the clip, the tie 7, or glue or sealing 8 is placed. The fast preparable semi-finished food product prepared in this way is packed and placed in places of long-term storage or transported to places of consumption. Before the use of the semi-finished food product, the volumetric insert 4 is removed (pulled out) from the edible shell 1 with the simultaneous squeezing of the moistening ingredient 3 inside the semi-finished food product. Thus, the moistening ingredient 3 is placed on the filling 2 and remains within the semi-finished food product.

### Industrial applicability

This method allows you to prepare semi-finished food products in a specially equipped place, and then transport and sell them where it is necessary, for example, in fast food places, street trades, etc., as well as in places not equipped for cooking of products.

### References:

1. "McDonald's in Russia: official site" [online] [found 2019-05-17].
   Found at <http://www.mcdonalds.ru>.
2. "Shawarma, shawarma and doner. The whole truth about the main dish of Russia" [online] [found 2019-05-17]. Found in
   <https: //lenta.ru/artlcles/2018/09/18/shawarma_vs_doner />
3. BY 6922 Cl (Educational institution "Mogilev State University of Food" (BY)) 2005.03.30.
4. EA 14369 B 1 (DSM NUTRITIONAL PRODUCTS AG (CH) 2010.10.29.
5. US 16147933 A1 (Albert Long Trinh, Dennis Sam Trinh. Toan Trinh) 2019.01.31.

## Claims

1. A semi-finished food product comprising a ready-to-eat edible shell and ready-to-eat filling located within the edible shell and made of products that require moistening before eating, and a moistening ingredient, **characterized in that** the moistening ingredient is placed in a volumetric insert made of a material suitable for use in contact with food, having a size in the longitudinal direction exceeding the size of the edible shell, and in the transverse direction, having a size less than the size of the edible shell, wherein one end of the said volumetric insert is closed and the opposite end of the volumetric insert is rolled up to exclude the possibility of premature release of the moistening ingredient, wherein the volumetric insert with the moistening ingredient is placed on the filling or in the filling so that the rolled end of the volumetric insert is within the edible shell and the closed end of the volumetric insert extends beyond the edible shell.

2. The semi-finished product according to claim 1, **characterized in that** the volumetric insert is made of collagen, natural, cellulose, synthetic or fibrous material.

3. The semi-finished product according to claim 1 or 2, **characterized in that** the end of the volumetric insert extending beyond the edible shell is provided with a clamp or clip or a tie.

4. The semi-finished product according to claim 1 or 2, **characterized in that** the end of the volumetric insert extending beyond the edible shell is sealed or glued.

5. The semi-finished product according to claim 1, **characterized in that** the edible shell is a ready-to-eat flour-based product.

6. The semi-finished product according to claim 5, **characterized in that** the flour-based product is selected from the group comprising a bread, a bun, a flat cake, a pita, a pita bread, or tortilla.

7. The semi-finished product according to claim 1, **characterized in that** the filling is a chopped meat or a fish, or vegetable products or combinations thereof.

8. The semi-finished product according to claim 1, 6 or 7, **characterized in that** the moistening ingredient is ketchup, or mayonnaise, or salad dressing, or marinade, or horseradish, or mustard, or compositions based on thereof, or a sauce with chopped vegetables and/or seasonings.

9. The semi-finished product according to claim 1, **characterized in that** the filling is a confectionery.

10. The semi-finished product according to claim 1, 6 or 9, **characterized in that** the moistening ingredient is a confectionery filling, a cream, a honey or a jelly.

11. A method for preparation of a semi-finished food product according to any of claim 1 to 3 and 5 to 9, comprising the steps of placing the filling on or in the edible shell, filling the volumetric insert with the moistening ingredient, rolling up one end of the volumetric insert and placing a clamp, or clip, or tie on the opposite end of the volumetric insert to form a closed volume and ensuring that the moistening ingredient is not prematurely released, placing of the volumetric insert with the moistening ingredient on the filling or within the filling, forming of the semi-finished product so that the rolled up end of the volumetric insert is within the edible shell and the closed end of the volumetric insert which is closed by the clamp, or the clip, or the tie is located outside the edible shell.

12. The method (option) for preparation of a semi-finished food product according to any of claim 1, 2 and 4 to 9, comprising the steps of placing the filling on or in the edible shell, inserting the moistening ingredient into the volumetric insert having already sealed or closed ends, rolling up the opposite end of said insert to form a closed volume and ensuring that the moistening ingredient is not prematurely released, placing the volumetric insert with the moistening ingredient on the filling or within the filling, forming of the semi-finished product so that the rolled up end of the volumetric insert is within the edible shell and the sealed or glued end of the volumetric insert is located outside the edible shell.

13. Use of a semi-finished product according to any of claims 1 to 12, wherein before use, the volumetric insert is removed from the edible shell by holding its closed end located outside the edible shell, while simultaneously squeezing out the moistening ingredient within the semi-finished product.
